(19) Europäisches Patentamt
European Patent Office
Office européen des brevets

(11) **EP 4 704 038 A1**

(12) **EUROPEAN PATENT APPLICATION**

(43) Date of publication:
**04.03.2026 Bulletin 2026/10**

(21) Application number: **25197659.3**

(22) Date of filing: **22.08.2025**

(51) International Patent Classification (IPC):
**G06T 11/23** (2026.01)     **G06V 30/32** (2022.01)

(52) Cooperative Patent Classification (CPC):
**G06T 11/23; G06V 30/347;** G06T 2207/20072

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.08.2024 IN 202421065734**

(71) Applicant: **Tata Consultancy Services Limited
Maharashtra (IN)**

(72) Inventors:
• **PRUDVIRAJ, Jeripothula
500068 Hyderabad, Telangana (IN)**
• **JAMWAL, Vikram
411028 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR STROKE-BY-STROKE CREATION OF VISUAL ARTWORKS AND IMAGES**

(57)     Existing sketch generation techniques have disadvantages such as less accuracy over complex sketches, incapable of scaling for complex sketches involving shading and textures, and high computational demands of deep reinforcement learning and lack an inherent sequence order while generating strokes. Embodiments disclosed herein provide a method and system which converts an input image to a sketch, and further obtains an associated sequence of strokes. Further, a sketch sequencing to orchestrate the sequence of strokes is performed, during which a stroke sequence is generated for a constructed sketch of strokes. Based on the generated stroke sequence, the input image is recreated. Further, a paint sequence for the recreated image is generated, wherein by executing the paint sequence, the recreated image is painted to match color of the input image.

FIG. 2

**Description**

CROSS-REFERENCE TO RELATED APPLICATIONS AND PRIORITY

The present application claims priority from Indian application no. 202421065734, filed on August 30, 2024.

TECHNICAL FIELD

The disclosure herein generally relates to image processing, and, more particularly, to a method and system for stroke-by-stroke creation of visual artworks and images.

BACKGROUND

Visual art allows to explore, express, and communicate ideas, emotions, perspectives, and experiences. Visual arts encompass various mediums such as drawing, painting, sculpture, and photography. In the realm of drawings and paintings, one may encounter a wide range of styles, themes, and artistic movements, reflecting the creativity and cultural diversity of human existence. Navigating and understanding this complex landscape is important for art education and appreciation. Digital technology can help bridge the gap between traditional art forms and modern accessibility. For example, high-resolution digital reconstructions for artworks allow museums to create virtual exhibits with interactive features such as zooming into specific painting parts or viewing various stroke forms of artwork, thereby enhancing visitor understanding and engagement. Similarly, understanding the process of construction of a painting is extremely educative. Investigating the extraction of strokes from famous artist paintings and constructing a stroke sequence order provides significant insights into the creative process, and fosters a deeper understanding of artistic craftsmanship and innovation. Moreover, detailed dynamic digital reconstructions of artworks also serve as valuable educational resources, enabling students and researchers to closely study historical paintings, understand the techniques used, and explore the artist's process. It can be surmised that by studying and emulating the techniques of master artists through digital reconstructions, students can develop their skills in painting and drawing, gaining insights into fundamental aspects such as brush control, color mixing, and composition.

Interactive models that help understand the drawing process, therefore, can prove to be extremely useful. However, building such methods that mimic the pragmatic drawing process is extremely challenging. It is hard to define the semantics of each piece of art, the geometries of sketch/painting, the number and the order of strokes, the individual stroke attributes like length, color, shape & texture, and the overall evolution of an artwork. The fundamental challenges in building the interactive drawing model are: (i) How to represent and extract stroke-level information for complex art, and (ii) What is the plausible way to construct the sequence order of strokes such that it mimics a drawing process?.

Some prior works have explored the explication of the drawing process in the recent past. One of the existing approaches introduced an algorithm designed to animate pre-drawn line drawings by determining stroke order, however the method struggled with accuracy over complex sketches. Subsequently, Sketch-RNN learns the construction of stroke sequences of hand-drawn sketches by training an ML model on thousands of human-drawn images. However, it's learning is based on the available labeled stroked data and it does not learn directly from the sketches. Furthermore, the method does not scale for complex sketches involving shading and textures. Another existing approach showed advancement with an image-to-pencil translation method that produces high-quality sketches and demonstrates the drawing process. Additionally, several works have investigated new levels of abstraction in object sketching through geometric and semantic simplifications. Despite these advancements, accurately recreating the intricate details of complex artworks remains a significant challenge. Furthermore, neural painting techniques employing reinforcement learning have attempted to generate stroke sequences for non-photo-realistic image recreation. Nevertheless, these methods struggle with the high computational demands of deep reinforcement learning and lack an inherent sequence order while generating strokes.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, an input image; converting, via the one or more hardware processors, the input image to a sketch of the input image, wherein, for the sketch, an associated sequence of strokes is obtained by feeding the sketch and the input image to a plurality of individual streams; performing, via the one or more hardware processors, the sketch sequencing to orchestrate the associated sequence of strokes, comprising: constructing, by processing the sequence of strokes and an associated plurality of pixel values, a sketch of strokes for the input image, wherein the sketch of strokes is constructed based on a plurality of vector curves identified in the sketch; and generating a stroke sequence for the constructed sketch of strokes, comprising: organizing a plurality of strokes forming the sketch of strokes to a plurality of stroke clusters, based on proximity of the plurality of strokes; and determining, based on proximity of the plurality of stroke clusters, a shortest path to traverse the plurality of stroke clusters, touching each of the plurality of stroke clusters only once, from stroke cluster identified as a central node, wherein the determined shortest path forms the stroke sequence, and wherein by following the determined stroke sequence, the input image is recreated; and generating, via the one or more hardware processors, a paint sequence for the recreated image, wherein by executing the paint sequence, the recreated image is painted to match color of the input image.

In an embodiment of the method, the paint sequence is generated by formulating a Red-Green-Blue (RGB) stroke sequence.

In another embodiment of the method, the plurality of vector curves comprise a line, a quadratic Bézier curve (QBC), a cubic Bézier curve (CBC), a circular arc (CA), and an Elliptical Arc (EA).

In another embodiment of the method, generating the paint sequence for the recreated image comprises: constructing, by processing an RGB input for the recreated image, a set of colored vector strokes; generating, for the set of colored vector strokes, an associated plurality of RGB clusters; and determining, for the plurality of RGB clusters, a coloring sequencing order, wherein the recreated image is colored based on the determined coloring sequencing order.

In another embodiment, a system is provided. The system includes one or more hardware processors, a communication interface, and a memory storing a plurality of instructions. The plurality of instructions cause the one or more hardware processors to: receive an input image; convert the input image to a sketch of the input image, wherein, for the sketch, an associated sequence of strokes is obtained by feeding the sketch and the input image to a plurality of individual streams; perform the sketch sequencing to orchestrate the sequence of strokes, by: constructing, by processing the associated sequence of strokes and an associated plurality of pixel values, a sketch of strokes for the input image, wherein the sketch of strokes is constructed based on a plurality of vector curves identified in the sketch; and generating a stroke sequence for the constructed sketch of strokes, comprising: organizing a plurality of strokes forming the sketch of strokes to a plurality of stroke clusters, based on proximity of the plurality of strokes; and determining, based on proximity of the plurality of stroke clusters, a shortest path to traverse the plurality of stroke clusters, touching each of the plurality of stroke clusters only once, from stroke cluster identified as a central node, wherein the determined shortest path forms the stroke sequence, and wherein by following the determined stroke sequence, the input image is recreated; and generate a paint sequence for the recreated image, wherein by executing the paint sequence, the recreated image is painted to match color of the input image.

In an embodiment of the system, the paint sequence is generated by formulating a Red-Green-Blue (RGB) stroke sequence.

In another embodiment of the system, the plurality of vector curves comprise a line, a quadratic Bézier curve (QBC), a cubic Bézier curve (CBC), a circular arc (CA), and an Elliptical Arc (EA).

In another embodiment of the system, generating the paint sequence for the recreated image comprises: constructing, by processing an RGB input for the recreated image, a set of colored vector strokes; generating, for the set of colored vector strokes, an associated plurality of RGB clusters; and determining, for the plurality of RGB clusters, a coloring sequencing order, wherein the recreated image is colored based on the determined coloring sequencing order.

In yet another aspect, there are provided one or more non-transitory machine-readable information storage mediums comprising one or more instructions which when executed by one or more hardware processors cause:: receiving an input image; converting the input image to a sketch of the input image, wherein, for the sketch, an associated sequence of strokes is obtained by feeding the sketch and the input image to a plurality of individual streams; performing the sketch sequencing to orchestrate the associated sequence of strokes, by: constructing, by processing the associated sequence of strokes and an associated plurality of pixel values, a sketch of strokes for the input image, wherein the sketch of strokes is constructed based on a plurality of vector curves identified in the sketch; and generating a stroke sequence for the constructed sketch of strokes, comprising: organizing a plurality of strokes forming the sketch of strokes to a plurality of stroke clusters, based on proximity of the plurality of strokes; and determining, based on proximity of the plurality of stroke clusters, a shortest path to traverse the plurality of stroke clusters, touching each of the plurality of stroke clusters only once, from stroke cluster identified as a central node, wherein the determined shortest path forms the stroke sequence, and wherein by following the determined stroke sequence, the input image is recreated; and generating a paint sequence for the recreated image, wherein by executing the paint sequence, the recreated image is painted to match color of the input image.

In an embodiment of the non-transitory computer readable medium, the paint sequence is generated by formulating a Red-Green-Blue (RGB) stroke sequence.

In another embodiment of the non-transitory computer readable medium, the plurality of vector curves comprise a line, a quadratic Bézier curve (QBC), a cubic Bézier curve (CBC), a circular arc (CA), and an Elliptical Arc (EA).

In another embodiment of the non-transitory computer readable medium, generating the paint sequence for the recreated image comprises: constructing, by processing an RGB input for the recreated image, a set of colored vector strokes; generating, for the set of colored vector strokes, an associated plurality of RGB clusters; and determining, for the plurality of RGB clusters, a coloring sequencing order, wherein the recreated image is colored based on the determined coloring sequencing order.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for recreating colored sketch from an image, according to some embodiments of the present disclosure.
FIG. 2 is a flow diagram depicting steps involved in the process of recreating the colored sketch from the image, using the system of FIG. 1, according to some embodiments of the present disclosure.
FIG. 3 is a flow diagram depicting steps involved in the process of generating a stroke sequence for the constructed sketch of strokes, using the system of FIG. 1, according to some embodiments of the present disclosure.
FIG. 4 is a flow diagram depicting steps involved in the process of generating the paint sequence for the recreated image, using the system of FIG. 1, according to some embodiments of the present disclosure.
FIGS. 5A and 5B are example diagrams illustrating stroke-by-stroke ordering on the WikiArt dataset, according to some embodiments of the present disclosure.
FIG. 6 illustrates sampled sequences from diverse input images, according to some embodiments of the present disclosure.
FIGS. 7A and 7B illustrate a comparative evolution of the method 200 against other state of the art techniques, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing approaches/techniques of sketch generation from images have certain disadvantages such as but not limited to: less accuracy over complex sketches, incapable of scaling for complex sketches involving shading and textures, and high computational demands of deep reinforcement learning and lack an inherent sequence order while generating strokes.

To address these challenges, embodiments disclosed herein provide a method and system for colored sketch generation from an image. In this method, an input image is received. The input image is converted to a sketch of the input image, wherein, for the sketch, an associated sequence of strokes is obtained by feeding the sketch and the input image to a plurality of individual streams. Further, a sketch sequencing to orchestrate the sequence of strokes is performed, by: constructing, by processing the sequence of strokes and associated plurality of pixel values, a sketch of strokes for the input image, wherein the sketch of strokes is constructed based on a plurality of vector curves identified in the sketch; and generating a stroke sequence for the constructed sketch of strokes. Generating the stroke sequence comprises of: organizing a plurality of strokes forming the sketch of strokes to a plurality of stroke clusters, based on proximity of the plurality of strokes; and determining, based on proximity of the plurality of stroke clusters, a shortest path to traverse the plurality of stroke clusters, touching each of the plurality of stroke clusters only once, from stroke cluster identified as a central node, wherein the determined shortest path forms the stroke sequence, and wherein by following the determined stroke sequence, the input image is recreated. Further, a paint sequence for the recreated image is generated, wherein by executing the paint sequence, the recreated image is painted to match color of the input image.

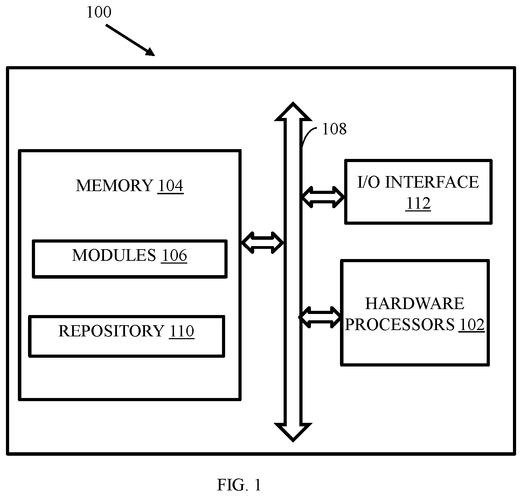

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for recreating colored sketch from an image, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of generating colored sketch from an image, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for generating the colored sketch from the image.

The data repository (or repository) 110 may include a plurality of abstracted piece of code for refinement and data that is processed, received, or generated as a result of the execution of the plurality of modules in the module(s) 106.

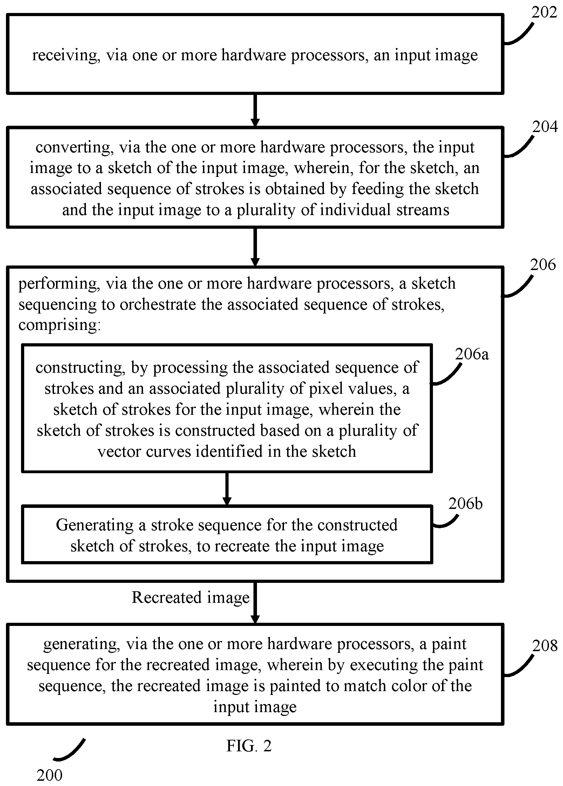

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2 through FIG. 4.

FIG. 2 is a flow diagram depicting steps involved in the process of recreating the colored sketch from the image, using the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 receives, via the one or more hardware processors 102, an input image. The input image is an image for which the corresponding sketch is to be generated. In various embodiments, the input image may be a colored image or a Black& White image or any in any other color format. The input image may be fed as input to the system 100 by a user, via a suitable user interface, or maybe automatically fetched by the system 100 from at least one other system that may be configured to communicate with the system 100 via one or more suitable interfaces.

Further, at step 204 of the method 200, the system 100 converts, via the one or more hardware processors 102, the input image to a sketch of the input image. The system 100 may use any suitable technique/approach such as, but not limited to, a line drawing generator built on depth information and CLIP loss, appearance loss, and geometry loss, for converting the input image to the sketch. The CLIP loss, appearance loss, and geometry loss ensure that the sketch, which is a line drawing, captures semantic content, visual appearance, and geometric structure of the input image. The line drawing generator generates the sketch by probing geometrics and semantics of the input image using an associated model. Further, for the sketch, an associated sequence of strokes is obtained by feeding the sketch and the input image to a plurality of individual streams.

Further, at step 206 of the method 200, the system 100 performs, via the one or more hardware processors 102, sketch sequencing to orchestrate the sequence of strokes. The sketch sequencing involves steps 206a and 206b. At step 206a, the system 100 constructs, by processing the sequence of strokes and associated plurality of pixel values, a sketch of strokes for the input image. The sketch of strokes is constructed based on a plurality of vector curves identified in the sketch. Each of the vector curves comprises a plurality of control points which act as reference points while drawing the sketch. The plurality of vector curves identified may be a line, a quadratic Bézier curve (QBC), a cubic Bézier curve (CBC), a circular arc (CA), and an Elliptical Arc (EA). Number of control points that define the shape of the line is 2, 3, 4, 3, and 3, for the line, the QBC, the CBC, the CA, and the EA respectively. It is to be noted that the line, the QBC, the CBC, the CA, and the EA are cited as examples only, and the system 100 maybe configured to work on any other vector type as well. The stroke construction maybe represented as:

$$S\_Strokes = StrokeConstruct(S) \quad where\ S\_Strokes_N =$$

$$s_0, s_1, s_2, \dots, s_N$$

*where,* S denotes the sketch, and *StrokeConstruct* converts the input image to the vector curves in terms of the line, the QBC, the CBC, the CA, and the EA, using any known technique.

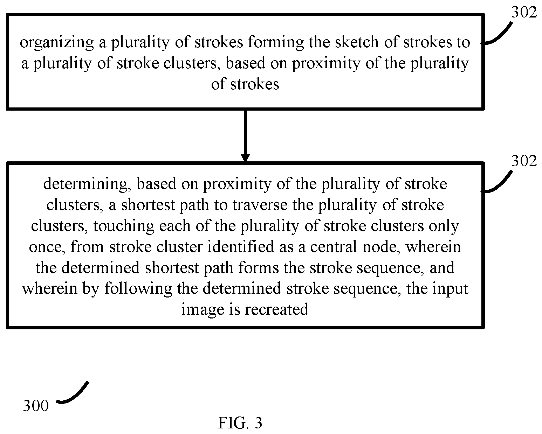

Further, at step 206b, the system 100 generates a stroke sequence for the constructed sketch of strokes. Steps involved in generating the stroke sequence are depicted in method 300 in FIG. 3 and are explained herein. At step 302 of the method 300, the system 100 organizes a plurality of strokes forming the sketch of strokes to a plurality of stroke clusters, based on proximity of the plurality of strokes. At this stage, distance between each two strokes from among the plurality of strokes is calculated, and if the calculated distance is below a threshold of distance, the two strokes that are being compared are determined to be in close proximity, and are grouped. Following this approach, a plurality of stroke clusters are formed. Generating the stroke clusters is represented as:

$$S\_Stroke\_clusters = Hierarchical\_clustering(S\_Strokes_N, dist_{prox}),$$

where, $dist_{prox} = 0$ causes individual grouping of the vector curves, and $dist_{prox} = \infty$ causes all the vector curves to form a single group.

Further, at step 304 of the method 300, the system 100 determines, based on the proximity of the plurality of stroke clusters, a shortest path to traverse the plurality of stroke clusters, touching each of the plurality of stroke clusters only once, from a stroke cluster identified as a central node. The proximity of the stroke clusters also is determined following a similar threshold based approach as used at step 302. In an embodiment, the system 100 may use a Travelling Salesman Problem (TSP) based approach for the grouping of the clusters. The determined shortest path forms the stroke sequence. Further, by following the determined stroke sequence, the input image is recreated in corresponding sketch form.

The TSP based clustering is represented as:

$$S\_Stroke\_seq = TSP(S\_Stroke\_Clusters_M(P_{ij})),$$

where, $P_{ij}$ represents centroid coordinates of a cluster $C_i$ as: ($P_{ij} = (p_i, p_j)$)

An objective function used in determining the shortest path is given as:

$$\sum_{i=1}^{M} \sum_{j=1, j\neq1}^{M} c_{ij} \cdot b_{ij},$$

where, $c_{ij}$ represents distance between centroids of the clusters i and j, and $b_{ij}$ is a binary decision variable indicating whether there is a direct tour between stroke clusters $c_i$ and $c_j$.

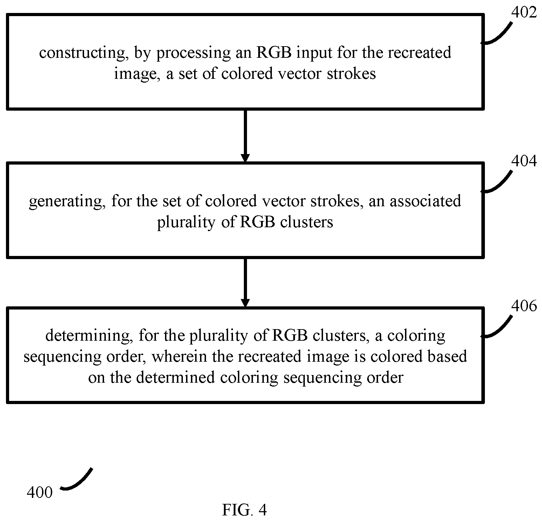

The recreated input image is further processed at step 208 to generate a paint sequence for the recreated image, by formulating a RGB stroke sequence. Various steps in the process of generating the paint sequence are depicted in method 400 in FIG. 4, and are explained hereafter. At step 402 of the method 400, the system 100 constructs, by processing an RGB input for the recreated image, a set of colored vector strokes, represented as:

$$P\_Strokes = StrokeConstruct(X),$$

where $P\_Strokes_T = s_0, s_1, s_2, ..., s_T$, where, X denotes the input image, StrokeConstruct produces RGB geometric curves, i.e., paint strokes, in terms of the vector curves.

Further, at step 404 of the method 400, the system 100 generates, for the set of colored vector strokes, an associated plurality of RGB clusters. In an embodiment, the RGB clusters are generated using a TSP based approach as:

$$P\_Stroke\_clusters = Hierarchical\_clustering\,(P\_Strokes_T, dist_{prox})$$

$$P\_Stroke\_seq = TSP(P\_Stroke\_Clusters_V\,(Q_{ij}))$$

Further, at step 406 of the method 400, the system 100 determines, for the plurality of RGB clusters, a coloring sequencing order, wherein the recreated image is colored based on the determined coloring sequencing order. The method 200 thus facilitates a stroke-by-stroke creation of visual artworks and images.

The coloring sequencing order is represented as:

$$Stroke\_seq_{Global} = (S\_Stroke\_seq + P\_Stroke\_seq),$$

where, $Stroke\_seq_{Global}$ represents stroke-by-stroke evolution of the image from the sketch.

Experimental Data:

1. Dataset:

A sample dataset curated from WikiArt that included diverse range of artworks by renowned artists. Particularly, 500 artworks were samples from various artists to evaluate the effectiveness of the method 200. Further, 90 sketch images and 70 RGB images were harvested, which include line art, face sketches, and natural images, to investigate the proposed method in diverse settings.

Face sketches were randomly sampled from FS2K-SDE Dataset, line art sketches were obtained, and natural images were drawn.

2. Implementation details:

To obtain sketches from paintings and natural images, line drawing method that is trained on sampled COCO dataset using CLIP features was used. Further, to attain a vector image of input sketch image, the pixel image was converted into vector curves through SVG conversion via publicly available tool. No restrictions were imposed on dimensions of image inputs or the number of strokes within each image. And, the proximity distance was treated as a hyper-parameter, which typically set to max(width, height)/8. The number of clusters and the number of strokes per cluster are determined based on this proximity distance.

3. Results:

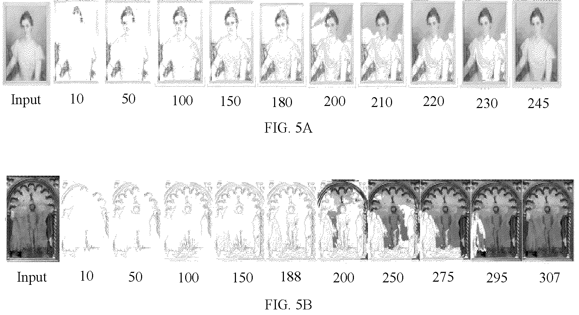

FIGS. 5A and 5B show some examples of stroke-by-stroke ordering on the WikiArt dataset. From this figure, it can be observed that the method 200 successfully composes stroke sequence evolution from sketch to paint. Additionally, it effectively handles images with varied resolutions, intricate details, numerous strokes, and diverse color palettes.

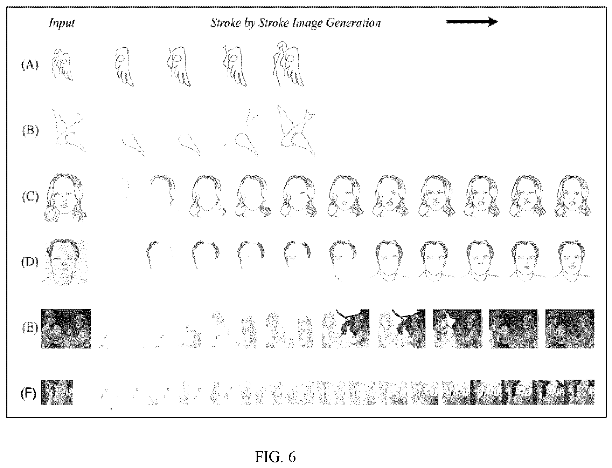

To evaluate the robustness of the method 200, the same was extended to other forms of data such as line art, face sketches, and natural images. FIG. 6 presents sampled sequences from these diverse input images. The results demonstrate that the predicted stroke sequence order closely mirrors the pragmatic drawing process, regardless of the input type. Specifically, the method 200 produces plausible drawing sequences for less complex images like line art and face sketches.

As seen in FIG. 6, natural images, which are equally complex in terms of resolution, detail, and stroke count, were also effectively interpreted by the method 200, which reasonably comprehended the drawing sequence for these images. From all the results presented above, it was inferred that the method 200 can comprehend any form of data and produce a programmatic drawing process.

4. Comparison with other methods:

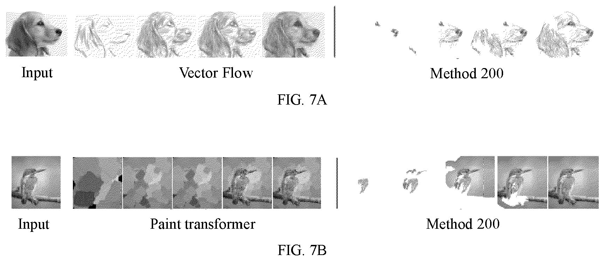

In this section, effectiveness of the method 200 relative to other state-of-the-art methods are analyzed. FIGS. 7A and 7B illustrate the comparative evolution of the method 200 against other state of the art techniques. For a fair assessment, the image-to-sketch translation obtained via the method 200 was compared with image-to-pencil translation obtained using VectorFlow, and colored stroke sequence with Paint Transformer's paint sequence. To ensure comparability, color sequencing was omitted for VectorFlow and sketch sequencing for Paint Transformer. From the FIG. 7, it can be inferred that the method 200 can provide systematic sequencing rather than projecting strokes in random order as in the state of the art techniques.

In an embodiment, a GenAI model is trained by using the generated stroke sequences and the associated sketch, for a plurality of images, as training data. The GenAI model once trained with this training data, can be then used for taking test data (i.e., images) as input and for generating corresponding stroke sequences and in turn the sketch.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of sketch recreation from image. The embodiment, thus provides a mechanism of sketch recreation from image. Moreover, the embodiments herein further provide a mechanism for stroke sequence generation in the process of sketch recreation from image.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

> receiving (202), via one or more hardware processors, an input image;
> converting (204), via the one or more hardware processors, the input image to a sketch of the input image, wherein, for the sketch, an associated sequence of strokes is obtained by feeding the sketch and the input image to a plurality of individual streams;
> performing (206), via the one or more hardware processors, a sketch sequencing to orchestrate the associated sequence of strokes, comprising:
>
>> constructing (206a), by processing the associated sequence of strokes and an associated plurality of pixel values, a sketch of strokes for the input image, wherein the sketch of strokes is constructed based on a plurality of vector curves identified in the sketch; and
>> generating (206b) a stroke sequence for the constructed sketch of strokes, comprising:
>>
>>> organizing (302) a plurality of strokes forming the sketch of strokes to a plurality of stroke clusters, based on proximity of the plurality of strokes; and
>>> determining (304), based on proximity of the plurality of stroke clusters, a shortest path to traverse the plurality of stroke clusters, touching each of the plurality of stroke clusters only once, from a stroke cluster identified as a central node, wherein the determined shortest path forms the stroke sequence, and wherein by following the determined stroke sequence, the input image is recreated; and
>
> generating (208), via the one or more hardware processors, a paint sequence for the recreated image, wherein by executing the paint sequence, the recreated image is painted to match color of the input image.

2. The processor implemented method as claimed in claim 1, wherein the paint sequence is generated by formulating a Red - Green - Blue (RGB) stroke sequence.

3. The processor implemented method (200) as claimed in claim 1, wherein the plurality of vector curves comprise a line, a quadratic Bézier curve (QBC), a cubic Bézier curve (CBC), a circular arc (CA), and an Elliptical Arc (EA).

4. The processor implemented method (200) as claimed in claim 1, wherein generating the paint sequence for the recreated image comprises:

> constructing (402), by processing an RGB input for the recreated image, a set of colored vector strokes;
> generating (404), for the set of colored vector strokes, an associated plurality of RGB clusters; and
> determining (406), for the plurality of RGB clusters, a coloring sequencing order, wherein the recreated image is colored based on the determined coloring sequencing order.

5. A system (100), comprising:

> one or more hardware processors (102);
> a communication interface (112); and
> a memory (104) storing a plurality of instructions, wherein the plurality of instructions cause the one or more hardware processors to:
>
>> receive an input image;
>> convert the input image to a sketch of the input image, wherein, for the sketch, an associated sequence of strokes is obtained by feeding the sketch and the input image to a plurality of individual streams;
>> perform a sketch sequencing to orchestrate the associated sequence of strokes, by:
>>
>>> constructing, by processing the associated sequence of strokes and an associated plurality of pixel values, a sketch of strokes for the input image, wherein the sketch of strokes is constructed based on a plurality of vector curves identified in the sketch; and

generating a stroke sequence for the constructed sketch of strokes, comprising:

organizing a plurality of strokes forming the sketch of strokes to a plurality of stroke clusters, based on proximity of the plurality of strokes; and

determining, based on proximity of the plurality of stroke clusters, a shortest path to traverse the plurality of stroke clusters, touching each of the plurality of stroke clusters only once, from a stroke cluster identified as a central node, wherein the determined shortest path forms the stroke sequence, and wherein by following the determined stroke sequence, the input image is recreated; and

generate a paint sequence for the recreated image, wherein by executing the paint sequence, the recreated image is painted to match color of the input image.

6. The system (100) as claimed in claim 5, wherein the one or more hardware processors are configured to generate the paint sequence by formulating a Red - Green - Blue (RGB) stroke sequence.

7. The system (100) as claimed in claim 5, wherein the plurality of vector curves comprise a line, a quadratic Bézier curve (QBC), a cubic Bézier curve (CBC), a circular arc (CA), and an Elliptical Arc (EA).

8. The system (100) as claimed in claim 5, wherein the one or more hardware processors are configured to generate the paint sequence for the recreated image by:

constructing, by processing an RGB input for the recreated image, a set of colored vector strokes;

generating, for the set of colored vector strokes, an associated plurality of RGB clusters; and

determining, for the plurality of RGB clusters, a coloring sequencing order, wherein the recreated image is colored based on the determined coloring sequencing order.

9. One or more non-transitory machine-readable information storage mediums comprising one or more instructions which when executed by one or more hardware processors cause:

receiving an input image;

converting the input image to a sketch of the input image, wherein, for the sketch, an associated sequence of strokes is obtained by feeding the sketch and the input image to a plurality of individual streams;

performing a sketch sequencing to orchestrate the associated sequence of strokes, comprising:

constructing, by processing the associated sequence of strokes and an associated plurality of pixel values, a sketch of strokes for the input image, wherein the sketch of strokes is constructed based on a plurality of vector curves identified in the sketch; and

generating a stroke sequence for the constructed sketch of strokes, comprising:

organizing a plurality of strokes forming the sketch of strokes to a plurality of stroke clusters, based on proximity of the plurality of strokes; and

determining based on proximity of the plurality of stroke clusters, a shortest path to traverse the plurality of stroke clusters, touching each of the plurality of stroke clusters only once, from a stroke cluster identified as a central node, wherein the determined shortest path forms the stroke sequence, and wherein by following the determined stroke sequence, the input image is recreated; and

generating, a paint sequence for the recreated image, wherein by executing the paint sequence, the recreated image is painted to match color of the input image.

10. The one or more non-transitory machine readable information storage mediums as claimed in claim 9, wherein the paint sequence is generated by formulating a Red - Green - Blue (RGB) stroke sequence.

11. The one or more non-transitory machine readable information storage mediums as claimed in claim 9, wherein the plurality of vector curves comprise a line, a quadratic Bézier curve (QBC), a cubic Bézier curve (CBC), a circular arc (CA), and an Elliptical Arc (EA).

**12.** The one or more non-transitory machine readable information storage mediums as claimed in claim 9, wherein generating the paint sequence for the recreated image comprises:

constructing by processing an RGB input for the recreated image, a set of colored vector strokes;
generating for the set of colored vector strokes, an associated plurality of RGB clusters; and
determining for the plurality of RGB clusters, a coloring sequencing order, wherein the recreated image is colored based on the determined coloring sequencing order.

100

108

MEMORY 104

MODULES 106

REPOSITORY 110

I/O INTERFACE
112

HARDWARE
PROCESSORS 102

FIG. 1

202

receiving, via one or more hardware processors, an input image

204

converting, via the one or more hardware processors, the input image to a sketch of the input image, wherein, for the sketch, an associated sequence of strokes is obtained by feeding the sketch and the input image to a plurality of individual streams

206

performing, via the one or more hardware processors, a sketch sequencing to orchestrate the associated sequence of strokes, comprising:

206a

constructing, by processing the associated sequence of strokes and an associated plurality of pixel values, a sketch of strokes for the input image, wherein the sketch of strokes is constructed based on a plurality of vector curves identified in the sketch

206b

Generating a stroke sequence for the constructed sketch of strokes, to recreate the input image

Recreated image

208

generating, via the one or more hardware processors, a paint sequence for the recreated image, wherein by executing the paint sequence, the recreated image is painted to match color of the input image

200

FIG. 2

organizing a plurality of strokes forming the sketch of strokes to
a plurality of stroke clusters, based on proximity of the plurality
of strokes

302

determining, based on proximity of the plurality of stroke
clusters, a shortest path to traverse the plurality of stroke
clusters, touching each of the plurality of stroke clusters only
once, from stroke cluster identified as a central node, wherein
the determined shortest path forms the stroke sequence, and
wherein by following the determined stroke sequence, the input
image is recreated

302

300

FIG. 3

constructing, by processing an RGB input for the recreated image, a set of colored vector strokes

402

generating, for the set of colored vector strokes, an associated plurality of RGB clusters

404

determining, for the plurality of RGB clusters, a coloring sequencing order, wherein the recreated image is colored based on the determined coloring sequencing order

406

400

FIG. 4

Input    10    50    100    150    180    200    210    220    230    245

FIG. 5A

Input    10    50    100    150    188    200    250    275    295    307

FIG. 5B

FIG. 6

Input            Vector Flow                    Method 200

FIG. 7A

Input        Paint transformer                  Method 200

FIG. 7B

EUROPEAN SEARCH REPORT

**Application Number**

EP 25 19 7659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FU HONGBO ET AL: "Animated construction of line drawings", COMPUTERS AND ACCESSIBILITY, ACM, 2 PENN PLAZA, SUITE 701 NEW YORK NY 10121-0701 USA, 12 December 2011 (2011-12-12), pages 1-10, XP058499511, DOI: 10.1145/2024156.2024167 ISBN: 978-1-4503-0920-2 | 1-3,5-7, 9-11 | INV. G06T11/23 G06V30/32 |
| A | * abstract * * page 2 - page 6 * ----- | 4,8,12 | |
| A | LIU SONGHUA ET AL: "Paint Transformer: Feed Forward Neural Painting with Stroke Prediction", 2021 IEEE/CVF INTERNATIONAL CONFERENCE ON COMPUTER VISION (ICCV), IEEE, 10 October 2021 (2021-10-10), pages 6578-6587, XP034092444, DOI: 10.1109/ICCV48922.2021.00653 [retrieved on 2022-02-10] * abstract * * page 3 - page 5 * ----- | 1-12 | |
| A | US 2011/175916 A1 (NORIS GIOACCHINO [CH] ET AL) 21 July 2011 (2011-07-21) * abstract; figures 9,10,13 * ----- | 1-12 | TECHNICAL FIELDS SEARCHED (IPC) G06T G06V |

The present search report has been drawn up for all claims

| Place of search | Date of completion of the search | Examiner |
|---|---|---|
| Munich | 12 January 2026 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 19 7659

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2026

| Patent document cited in search report | Publication date | Patent family member(s) | Publication date |
|---|---|---|---|
| US 2011175916 A1 | 21-07-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421065734